Europäisches Patentamt

European Patent Office

Office européen des brevets

(19)

(11) **EP 1 430 614 B1**

(12) **EUROPÄISCHE PATENTSCHRIFT**

(45) Veröffentlichungstag und Bekanntmachung des Hinweises auf die Patenterteilung:
**13.04.2005 Patentblatt 2005/15**

(21) Anmeldenummer: **02754419.6**

(22) Anmeldetag: **23.07.2002**

(51) Int Cl.$^7$: **H04B 1/707**

(86) Internationale Anmeldenummer:
**PCT/DE2002/002708**

(87) Internationale Veröffentlichungsnummer:
**WO 2003/028239 (03.04.2003 Gazette 2003/14)**

(54) **VERFAHREN UND VORRICHTUNG ZUR BESTIMMUNG VON INITIALISIERUNGSZUSTÄNDEN BEI PSEUDO-NOISE-FOLGEN**

METHOD AND DEVICE FOR DETERMINING THE INITIALIZATION STATES IN PSEUDO-NOISE SEQUENCES

PROCEDE ET DISPOSITIF POUR DETERMINER DES ETATS D'INITIALISATION DANS DES SEQUENCES DE PSEUDO-BRUIT

(84) Benannte Vertragsstaaten:
**DE GB**

(30) Priorität: **26.09.2001 DE 10147306**

(43) Veröffentlichungstag der Anmeldung:
**23.06.2004 Patentblatt 2004/26**

(73) Patentinhaber: **Infineon Technologies AG**
**81669 München (DE)**

(72) Erfinder: **DENK, Robert**
**85567 Grafing (DE)**

(74) Vertreter: **Lange, Thomas, Dr.**
**Patentanwälte**
**Lambsdorff & Lange**
**Dingolfinger Strasse 6**
**81673 München (DE)**

(56) Entgegenhaltungen:
**EP-A- 1 109 320          US-A- 6 038 577**

- **LEE, MILLER: "CDMA Systems Engineering Handbook" 1998 , ARTECH HOUSE PUBLISHERS , BOSTON XP002225710 in der Anmeldung erwähnt Absatz [6.2.2] Absatz [6.2.3]**
- **3GPP TSG RAN WG1: "TS 25.213 V2.0.0:Third Generation Partnership Project (3GPP);Technical Specification Group (TSG); Radio Access Network (RAN); Working group 1 (WG1); Spreading and Modulation (FDD)" , TS 25.213 V2.0.0, XX, XX, PAGE(S) 1-26 XP002180897 in der Anmeldung erwähnt Absatz [05.2]**

**Beschreibung**

Die Erfindung betrifft ein Verfahren sowie eine Vorrichtung zur Bestimmung eines n Bit umfassenden, N-fach iterierten Endzustands einer Schieberegisteranordnung aus einem gegebenen, n Bit umfassenden Anfangszustand der Schieberegisteranordnung. Des weiteren betrifft die Erfindung die Erzeugung von um N Bit verschobenen Pseudo-Noise-Folgen, welche insbesondere als Spreizfolgen in CDMA-basierten Mobilfunksystemen (CDMA: Code Division Multiple Access) verwendet werden.

In einem Mobilfunksystem werden die von der Basisstation bzw. von der Mobilstation generierten Signale vor ihrer Aussendung mehrere Male modifiziert. Unter anderem, um verschiedene Zellen in einem Mobilfunknetz unterscheiden zu können, werden bei CDMA-Systemen Spreizfolgen eingesetzt, wobei jedem Benutzer und jedem logischen Kanal eine andere Folge der Werte -1 und 1 zugeordnet wird. Dadurch kann das dem einzelnen Benutzer zugeordnete Signal empfangen, von den anderen Signalen getrennt und rekonstruiert werden. Dies bezeichnet man als Code Division Multiple Access (CDMA). Im Gegensatz dazu werden bei TDMA-Systemen (Time Division Multiple Access) die Signale zeitlich voneinander getrennt. Wichtige CDMA-Übertragungssysteme sind das in den USA verwendete System IS-95 und das System UMTS, welches im $3^{rd}$ Genereration Partnership Project (3GPP) spezifiziert wird. Die genaue Beschreibung der verwendeten Codierung für UMTS ist in "3GPP: Spreading and modulation (FDD)", $3^{rd}$ Generation Partnership Project TS 25.213, Release 1999 zu finden.

Alle verwendeten Spreizcodes lassen sich auf Folgen der Binärwerte 0 und 1 zurückführen. Bei diesen Folgen kann es sich beispielsweise um sogenannte Pseudo-Noise-Folgen handeln, welche durch definierte Autokorrelations- und Kreuzkorrelationseigenschaften gekennzeichnet sind. Während in der theoretischen Darstellung eine Pseudo-Noise-Folge als Folge der Binärwerte 0 und 1 dargestellt wird, handelt es sich bei der tatsächlich verwendeten Spreizfolge um eine Folge der Werte +1 und -1. Aus dem Binärwert 0 wird in der tatsächlichen Spreizfolge jeweils der Wert +1.

Pseudo-Noise-Folgen sind durch eine Iterationsvorschrift definiert, wobei die Iteration im Körper GF(2), also im Zahlenkörper mit den beiden Elementen 0 und 1, ausgeführt wird. Theoretische Grundlage der Pseudo-Noise-Folgen und der definierenden Iterationsvorschrift ist die Theorie irreduzibler primitiver Polynome über dem Körper GF (2). Eine Darstellung dieser Theorie und ihrer Anwendung im Mobilfunkbereich findet sich zum Beispiel in "CDMA Systems Engineering Handbook" von J.S. Lee, L.E. Miller, Artech House, Boston/London, 1998, und dort insbesondere in Kapitel 6.

Jede individuelle Pseudo-Noise-Folge ist eindeutig festgelegt durch den Anfangszustand, also durch die ersten Werte der Folge, sowie durch das für die Iteration verwendete Polynom. Dabei ist das Polynom und damit die Iterationsvorschrift in Mobilfunkanwendungen entweder für das gesamte Netzwerk festgelegt, oder es kommen insgesamt nur einige wenige verschiedene Polynome zur Anwendung, wie dies zum Beispiel bei UMTS-Systemen für die Definition der sogenannten Scrambling-Codes der Fall ist. Der Anfangszustand ist für jede individuelle Pseudo-Noise-Folge verschieden und wird häufig durch die Code-Nummer festgelegt.

In einer Basisstation bzw. in einer Mobilstation muss daher zu einer gegebenen Code-Nummer und zu einer ebenfalls vorgegebenen Iterationsvorschrift die zugehörige Pseudo-Noise-Folge generiert werden. Beim Sendebetrieb muss die erzeugte Folge zur Codierung des Signals verwendet werden. Im Empfangsmodus hingegen erlaubt die Verwendung der Pseudo-Noise-Folge, das gewünschte Signal zu erkennen und von den Signalen für andere Benutzer zu unterscheiden. Falls die Anfangswerte der gesuchten Folge bekannt sind, können die weiteren Folgenwerte durch einfache Register-Operationen ohne Schwierigkeiten erzeugt werden. Dabei muss auf die zeitliche Übereinstimmung zwischen der zu sendenden bzw. der empfangenen Information einerseits und der konstruierten Folge andererseits geachtet werden.

In verschiedenen Mobilfunkanwendungen ist jedoch der Anfang der Folge und damit der Anfangszustand der Register nicht bekannt. Dies ist zum Beispiel dann der Fall, wenn die Codierung zu einem anderen Zeitpunkt gestartet werden soll als die Signalübertragung selbst. Dieser Fall tritt bei UMTS im sogenannten Compressed Mode auf; nähere Informationen zu diesem Modus finden sich in "3GPP: Physical channels and mapping of transport channels onto physical channels (FDD)", $3^{rd}$ Generation Partnership Project TS 25.211, Release 1999.

Der Anfang der Folge und damit der Anfangszustand der Register ist auch dann nicht bekannt, wenn die Code-Nummer nicht direkt die anfängliche Registerbelegung festlegt, sondern statt dessen eine Verschiebung der verwendeten Pseudo-Noise-Folge um eine gewisse Anzahl von Bits definiert. So wird zum Beispiel in UMTS beim Empfang eines Signals im Mobilteil entsprechend dem 3GPP-Standard der Code Nummer N als eine um N Bits verschobene Pseudo-Noise-Folge definiert. Nähere Informationen zu dem Zusammenhang zwischen der Code-Nummer und der zugehörigen Pseudo-Noise-Folge finden sich in "3GPP: Spreading and modulation (FDD)", $3^{rd}$ Generation Partnership Project TS 25.213, Release 1999, und zwar insbesondere in Abschnitt 5.2.

Um den Anfangszustand der Register für den Fall zu berechnen, dass die Folge einer zusätzlichen Verschiebung bzw. einem zusätzlichen Offset von N Bits unterworfen wurde, kann die Folge zum ursprünglichen Anfangszeitpunkt gestartet und anschließend N-fach iteriert werden. Auf diese Weise kann die gewünschte, um N Bits verschobene Folge erhalten werden.

In bisherigen Systemen des Stands der Technik wurde diese Lösung praktiziert. Vor der Ausgabe der gewünschten Pseudo-Noise-Folge wurde der Registerinhalt der Schieberegisterstruktur N-fach iteriert. Erst nach der Durchführung dieser Vorab-Iterationen wurde mit der Ausgabe der eigentlichen, um N Bits verschobenen Pseudo-Noise-Folge begonnen. Ein Nachteil dieser Vorgehensweise ist, dass die Anzahl der benötigten Operationen proportional zur Größe der gewünschten Verschiebung N ist. Die Anzahl der benötigten Operationen variiert daher in Abhängigkeit von den aktuellen Daten, und dies erschwert die Kontrolle der zeitlichen Gesamtabfolge. Ein weiterer Nachteil ist, dass bei großen Werten der gewünschten Verschiebung N der rechnerische und zeitliche Aufwand sehr groß wird. Bei UMTS-Systemen treten im Empfangsbetrieb der Mobilstation Offsets im Bereich von N = 0 bis N = 262142 auf. Da mit der Erzeugung der gewünschten Pseudo-Noise-Folge gewartet werden muss, bis der gewünschte Offset erreicht ist, bedeutet dies eine inakzeptable Verzögerung des Sende- bzw. Empfangsvorgangs.

US-A-6 038 577 offenbart ein Verfahren zum Herstellen einer um eine arbiträre Verzögerung verschobene PN-Sequenz. Bei dem aus D1 bekannten Verfahren werden durch polynomische Exponentation die Koeffizienten einer Maske berechnet. Die Maske (Vektor) wird mit dem Inhalt des Schieberegisters (Vektor) multipliziert um ein Skalarprodukt zu berechnen das als Ausgang dient.

Es ist daher Aufgabe der Erfindung, zu einem gegebenen Anfangszustand den N-fach iterierten Endzustand bzw. die um N Bit verschobene Pseudo-Noise-Folge direkt zu berechnen.

Diese Aufgabe der Erfindung wird durch ein Verfahren zur Bestimmung eines n Bit umfassenden, N-fach iterierten Endzustands nach Anspruch 1, durch eine Vorrichtung zur Bestimmung eines n Bit umfassenden, N-fach iterierten Endzustands nach Anspruch 14 sowie durch die Verwendung dieser Vorrichtung zur Erzeugung einer Spreizfolge gemäß Anspruch 20 gelöst.

Bei dem erfindungsgemäßen Verfahren zur Bestimmung eines n Bit umfassenden, N-fach iterierten Endzustands einer Schieberegisteranordnung aus einem gegebenen, n Bit umfassenden Anfangszustand der Schieberegisteranordnung ist die Iterationsvorschrift durch das charakteristische Polynom

$$f(x) = 1 + c_1 \cdot x + c_2 \cdot x^2 + ... + c_{n-1} \cdot x^{n-1} + x^n$$

mit $c_1, c_2, ... c_{n-1} \in \{0; 1\}$ gegeben. In einem ersten Schritt wird das Polynom

$$f^*(x) = 1 + c_{n-1} \cdot x + c_{n-2} \cdot x^2 + ... + x^n$$

durch Spiegelung der Koeffizienten des Polynoms

$$f(x) = 1 + c_1 \cdot x + c_2 \cdot x^2 + ... + c_{n-1} \cdot x^{n-1} + x^n$$

bestimmt. Anschließend wird für j = 1,...,n derjenige Vertreter der Restklasse

$$[x^{N+j-1}] \bmod f^*$$

bestimmt, dessen Grad kleiner als n ist. Daraufhin wird die Bitsequenz des Anfangszustands mit einer Matrix multipliziert, deren j-te Zeile bzw. j-te Spalte für j = 1,...,n durch die Koeffizienten des Vertreters der Restklasse

$$[x^{N+j-1}] \bmod f^*$$

gegeben ist.

Mit dem erfindungsgemäßen Verfahren ist es erstmals möglich, den Zustand einer durch ein charakteristisches Polynom definierten Schieberegisteranordnung, welcher sich nach Durchführung von N Iterationen ergibt, explizit zu berechnen. Im Stand der Technik mussten zur Bestimmung dieses Endzustands N Iterationen der Schieberegisteranordnung vorab ausgeführt werden. Da zur Erzeugung der verschiedenen bei der Mobilfunkübertragung benötigten Codes teilweise bis zu N = 262142 Vorab-Iterationen ausgeführt werden müssten, ist durch die Möglichkeit, den N-fach iterierten Endzustand explizit zu berechnen, eine immense zeitersparnis gegeben. Die Erfindung bietet die Möglichkeit, eine bestimmte, um den Offset N verschobene Codefolge quasi verzögerungsfrei zur Verfügung zu stellen.

Die Bestimmung von demjenigen Vertreter der Restklasse

$$[x^{N+j-1}] \bmod f^*$$

dessen Grad kleiner als n ist, kann mit Hilfe von schnellen Algorithmen zur Restklassenberechnung, beispielsweise mit Hilfe von Square-and-Multiply Algorithmen, in sehr kurzer Zeit durchgeführt werden. Für den rechnerischen und zeitlichen Aufwand zur Bestimmung eines Vertreters der Restklasse

$$[x^{N+j-1}] \bmod f^*$$

ergibt sich dabei eine logarithmische Abhängigkeit von N, also eine logarithmische Abhängigkeit von der gewünschten Offset-Verschiebung der Codefolge. Bei der Durchführung von N Vorab-Iterationen, wie sie im Stand der Technik notwendig war, nahm der rechnerische und zeitliche Aufwand zur Durchführung der Vorab-Iterationen linear mit N zu. Insbesondere für große Werte von N ergibt sich bei der erfindungsgemäßen Lösung wegen der logarithmischen Abhängigkeit von N eine enorme Verkürzung der benötigten Rechenzeit.

Durch Schieberegisteranordnungen erzeugte Pseudo-Noise-Folgen werden insbesondere zur senderseitigen Codierung sowie zur empfängerseitigen Decodierung von Datenpaketen bei der Mobilfunkübertragung benötigt. Bei bisherigen Lösungen wurde durch die Durchführung von N Vorab-Iterationen eine inakzeptable Verzögerung des Sende- bzw. des Empfangsvorgangs verursacht. Derartig Verzögerungen können bei der erfindungsgemäßen Lösung vermieden werden, weil hier der N-fach iterierte Endzustand mittels einer Matrixmultiplikation und nicht wie bisher iterativ bestimmt wird.

Codefolgen, welche um N Bits verschoben sind, werden entsprechend dem 3GPP-Standard mit der Code-Nummer N bezeichnet. Die Erfindung bietet daher die Möglichkeit, sämtliche im 3GPP-Standard für die Mobilfunkübertragung definierten Codes ohne Wartezeit zu erzeugen. Bei der Funkübertragung von codierten Signalen gibt es darüber hinaus den Fall, dass die Codierung zu einem anderen Zeitpunkt gestartet werden soll als die Signalübertragung selbst. Beim Mobilfunkstandard UMTS ist dies beispielsweise beim sogenannten Compressed Mode der Fall. Mit Hilfe des erfindungsgemäßen Verfahrens, welches instantan einen N-fach iterierten Zustand der Schieberegisteranordnung erzeugen kann, kann somit der richtige Anfangszustand der Schieberegisteranordnung für die Signalcodierung im Compressed Mode generiert werden.

Die Erfindung eignet sich für alle Anwendungen, bei denen Codefolgen mit Hilfe einer getakteten, rückgekoppelten Schieberegisteranordnung erzeugt werden. Dabei wird die in der Schieberegisteranordnung vorgesehene Rückkopplung durch das charakteristische Polynom

$$f(x) = 1 + c_1 \cdot x + c_2 \cdot x^2 + ... + c_{n-1} \cdot x^{n-1} + x^n$$

festgelegt. Der n Bit umfassende Schieberegisterinhalt wird durch ein Taktsignal durch die Schieberegisteranordnung geschoben, wobei Bits, die aus dem Schieberegister herausgeschoben werden, zum Eingang der Schieberegisteranordnung rückgekoppelt werden. Derartige Schieberegisteranordnungen werden zum Zweck der Codierung und Decodierung eingesetzt. Mit dem erfindungsgemäßen Verfahren lässt sich zu einem gegebenen Anfangszustand der Schieberegisteranordnung der Endzustand berechnen, der nach N Schiebeoperationen beziehungsweise nach N an das Schieberegister angelegten Taktimpulsen erreicht ist.

Die erfindungsgemäße rechnerische Bestimmung des Endzustands erfordert die Berechnung einer Matrix sowie die Multiplikation des Anfangszustands mit dieser Matrix. Die rechnerische Bestimmung der Matrixelemente sowie die Durchführung der Matrixmultiplikation kann dabei von einem Prozessor, insbesondere von einem digitalen Signalprozessor, durchgeführt werden. Der berechnete Endzustand kann dann zur Initialisierung der im Hardware realisierten Schieberegisteranordnung verwendet werden. Die Erfindung ermöglicht es, die verschiedenen zur Code-Erzeugung benötigten Initialisierungszustände mit geringem rechnerischen Aufwand zuverlässig zu bestimmen.

Dabei ist es von Vorteil, wenn die Vertreter der Restklassen

$$[x^N] \bmod f^*, \ [x^{N+1}] \bmod f^*, ... \ [x^{N+n-1}] \bmod f^*$$

jeweils explizit mittels eines geeigneten Algorithmus, insbesondere mittels eines Square-and-Multiply Algorithmus berechnet werden. Für die Berechnung der Restklassen

$$[x^m] \bmod f^*,$$

von Monomen, wobei m eine natürliche Zahl ist, existieren eine Reihe verschiedener Algorithmen, welche jeweils die Koeffizienten von demjenigen Vertreter der Restklasse liefern, dessen Grad kleiner ist als n. Der rechnerische und zeitliche Aufwand bei der Ausführung dieser Algorithmen hängt dabei logarithmisch von m ab. Die zur Durchführung des erfindungsgemäßen Verfahrens benötigten Matrixelemente können daher auch für große Werte von N schnell erzeugt werden.

Dabei ist es insbesondere von Vorteil, wenn ein Square-and-Multiply Algorithmus eingesetzt wird. Ausgehend von dem Vertreter der Restklasse

$$[x] \bmod f^*$$

kann mit einem Square-and-Multiply Verfahren sehr schnell der Vertreter von

$$[x^m] \bmod f^*$$

berechnet werden, wobei m eine natürliche Zahl ist. Ein derartiger Square-and-Multiply Algorithmus wird in der Beschreibung dieser Patentanmeldung explizit aufgeführt. Der Algorithmus besteht nur aus wenigen Zeilen, lässt sich einfach implementieren und liefert verlässliche Ergebnisse für die Koeffizienten des Vertreters der Restklasse

$$[x^m] \bmod f^*.$$

Gemäß einer vorteilhaften Ausführungsform der Erfindung wird lediglich der Vertreter der Restklasse

$$[x^N] \bmod f^*$$

explizit mittels eines geeigneten Algorithmus, insbesondere mittels eines Square-and-Multiply Algorithmus, berechnet. Die Vertreter der Restklassen

$$[x^{N+j-1}] \bmod f^*$$

mit j = 2,...,n werden dagegen durch (n-1) rechnerisch durchgeführte Iterationen aus den Koeffizienten des Vertreters der Restklasse

$$[x^N] \bmod f^*$$

erhalten. Anstatt für alle N Zeilen der zu bestimmenden Matrix die Vertreter

$$[x^{N+j-1}] \bmod f^*$$

mit Hilfe eines Square-and-Multiply Algorithmus zu bestimmen, wird bei dieser Ausführungsform der Erfindung der Square-and-Multiply Algorithmus nur noch für die erste Zeile der Matrix durchgeführt. Die Matrixelemente der restlichen (n-1) Zeilen der Matrix werden dann mit Hilfe von (n-1) rechnerisch durchgeführten Iterationen dieser Koeffizienten erzeugt. Aus den Matrixelementen der j-ten Zeile können jeweils die Matrixelemente der (j+1)-ten Zeile bestimmt werden. Der Vorteil dieser Vorgehensweise gegenüber dem n-maligen Aufruf des Algorithmus ist eine weitere rechnerische Vereinfachung bei der Bestimmung der Matrixelemente. Die Zahl der zur Bestimmung der Matrixelemente erforderlichen Rechenschritte wird weiter verringert, und damit ist die Berechnung des N-fach iterierten Endzustands in noch kürzerer Zeit möglich.

Dabei ist es von Vorteil, wenn die Vertreter der Restklassen

$$[x^{N+j-1}] \bmod f^*$$

mit j = 2,...,n durch (n-1) rechnerisch durchgeführte Iterationen einer Schieberegisteranordnung vom MSRG-Typ (Modular Shift Register Generator) aus den Koeffizienten des Vertreters der Restklasse

$$[x^N] \bmod f^*$$

erhalten werden, wobei die Iterationsvorschrift für die Schieberegisteranordnung durch das charakteristische Polynom

$$f^*(x) = 1 + c_{n-1} \cdot x + c_{n-2} \cdot x^2 + ... + x^n$$

gegeben ist.

Um aus den Koeffizienten des Vertreters der Restklasse

$$[x^{N+j-1}] \bmod f^*$$

die Koeffizienten des Vertreters der Restklasse

$$[x^{N+j}] \bmod f^*$$

zu erhalten, um also aus der j-ten Zeile die (j+1)-te Zeile herzuleiten, wird eine rechnerische Iteration dieser Koeffizienten durchgeführt, die dem Durchschieben dieser Koeffizienten durch ein Schieberegister vom MSRG-Typ entspricht. Die Struktur eines Schieberegisters vom Typ MSRG wird durch das charakteristische Polynom

$$f^*(x) = 1 + c_{n-1} \cdot x + c_{n-2} \cdot x^2 + ... + x^n$$

festgelegt. Allerdings wird die iterative Bestimmung der Matrixelemente in der Regel nicht von einer in Hardware realisierten Schieberegisteranordnung durchgeführt, sondern rein rechnerisch mit Hilfe von Software oder mit Hilfe eines Prozessors, etwa eines digitalen Signalprozessors.

Die explizite Berechnung der ersten Matrixzeile, also der Koeffizienten des Vertreters der Restklasse

$$[x^N] \bmod f^*,$$

und die iterative Herleitung der restlichen Koeffizienten stellt die einfachste und schnellste Möglichkeit zur Berechnung sämtlicher Matrixelemente dar.

Es ist von Vorteil, wenn der n Bit umfassende, N-fach iterierte Endzustand als Initialisierungszustand für die Erzeugung einer um N Bit verschobenen Pseudo-Noise-Folge verwendet wird. Eine Folge von Binärwerten, welche von einer rückgekoppelten, durch ein irreduzibles Polynom beschriebenen Schieberegisteranordnung erzeugt wird, wird als Pseudo-Noise-Folge bezeichnet. Eine Pseudo-Noise-Folge wird zum einen durch den Initialzustand der Schieberegisteranordnung und zum anderen durch das charakteristische Polynom der Schieberegisteranordnung festgelegt. Wenn der mittels des erfindungsgemäßen Verfahrens berechnete, N-fach iterierte Endzustand als Initialisierungszustand für die Erzeugung einer Pseudo-Noise-Folge verwendet wird, dann bedeutet dies, dass die Pseudo-Noise-Folge sofort an der gewünschten, um N Bit verschobenen Stelle gestartet werden kann. Ausgehend vom Initialisierungszustand werden dann die weiteren Folgenwerte geliefert.

Es ist von Vorteil, wenn der n Bit umfassende, N-fach iterierte Endzustand als Initialisierungszustand in eine n Schieberegisterzellen umfassende Schieberegisteranordnung eingeschrieben wird. Mit Hilfe des erfindungsgemäßen Verfahrens wird der N-fach iterierte Endzustand rechnerisch bestimmt und anschließend in die in Hardware realisierte Schieberegisteranordnung eingeschrieben. Da der rechnerisch bestimmte, N-fach iterierte Endzustand genau dem Zustand der Schieberegisteranordnung nach der Durchführung von N Iterationen entspricht, kann ausgehend von dem berechneten Initialisierungszustand die gewünschte, um N Bit verschobene Pseudo-Noise-Folge erzeugt werden. Nach dem Einschreiben des berechneten Initialisierungszustands in die Schieberegisteranordnung ist nicht mehr erkennbar, ob dieser Zustand mit Hilfe von N Vorab-Iterationen der Schieberegisteranordnung oder durch Berechnung erreicht wurde.

Er ist von Vorteil, wenn es sich bei der Schieberegisteranordnung um eine n Schieberegisterzellen umfassende Schieberegisteranordnung vom Typ SSRG handelt, deren Struktur durch das charakteristische Polynom

$$f(x) = 1 + c_1 \cdot x + c_2 \cdot x^2 + ... + c_{n-1} \cdot x^{n-1} + x^n$$

gegeben ist. Bei der Realisierung einer Schieberegisteranordnung in Hardware ist eine Schieberegisteranordnung vom Typ SSRG (Simple Shift Register Generator) gegenüber dem Typ MSRG (Modular Shift Register Generator) von Vorteil, weil beim Typ SSRG der Inhalt einer Schieberegisterzelle direkt in die nächstfolgende Schieberegisterzelle geschoben wird. Beim Typ MSRG dagegen sind zwischen die einzelnen Schieberegisterzellen XOR-Gatter geschaltet, welche den Inhalt einer Registerzelle beim Weiterschieben zur nächstfolgenden Registerzellen modifizieren. Bei Schieberegistern des Typs SSRG werden die Inhalte der Registerzellen nicht modifiziert, und deshalb lassen sich derartige Schieberegisteranordnungen auf einfache Weise als Array von Registerzellen implementieren.

Die von der Schieberegisteranordnung erzeugte Pseudo-Noise-Folge kann an der letzten Registerzelle der Schieberegisteranordnung abgegriffen werden. Mit jedem Taktimpuls, mit dem die Inhalte der Schieberegisteranordnung weitergeschoben werden, wird ein neuer Binärwert in die letzte Registerzelle der Schieberegisteranordnung geschrieben. Durch Auslesen der letzten Registerzelle der Schieberegisteranordnung erhält man daher entsprechend der Taktfrequenz, mit der die Schieberegisteranordnung getaktet wird, nacheinander die verschiedenen Folgenwerte der Pseudo-Noise-Folge.

Es ist von Vorteil, wenn das Verfahren in CDMA-Übertragungssystemen, insbesondere in CDMA-Übertragungssystemen mit den Übertragungsstandards UMTS oder IS-95, zur Erzeugung einer Spreizfolge mit einem Offset von N Bits verwendet wird. Pseudo-Noise-Folgen, welche sich mit Hilfe rückgekoppelter Schieberegisteranordnungen erzeugen lassen, eignen sich wegen ihrer Korrelationseigenschaften hervorragend als Spreizfolgen für CDMA-basierte Systeme, insbesondere für Mobilfunksysteme. Spreizfolgen sind endliche Folgen der Werte -1 und 1. Beim Senden einer Datenfolge wird jeder Wert der Datenfolge mit der Spreizfolge multipliziert. Empfängerseitig können dann die verschiedenen Signale anhand ihrer aufgeprägten Spreizcodierung unterschieden und selektiv decodiert werden.

Um die spreizcodierten Signale empfängerseitig eindeutig decodieren zu können, müssen die verwendeten Spreizfolgen definierte Autokorrelationseigenschaften aufweisen. Außerdem muss eine gute Unterscheidbarkeit von Signalen, welche mit verschiedenen Spreizfolgen codiert worden sind, möglich sein. Hierzu müssen die verschiedenen für die Signalübertragung verwendeten Spreizcodes definierte Kreuzkorrelationseigenschaften aufweisen. Sowohl hinsichtlich der Autokorrelationseigenschaften als auch hinsichtlich der Kreuzkorrelationseigenschaften sind Pseudo-Noise-Folgen geeignet, als Spreizfolgen eingesetzt zu werden. Spreizfolgen können daher in CDMA-Übertragungssystemen mit Hilfe von rückgekoppelten Schieberegisteranordnungen erzeugt werden.

Mit Hilfe des erfindungsgemäßen Verfahrens lassen sich Initialisierungszustände erzeugen, die es ermöglichen, dass bei der Ausgabe der Spreizfolge nicht mit dem ersten Folgenwert, sondern mit dem N-ten Folgenwert begonnen wird. Die Erfindung erlaubt also die Erzeugung von um N Bits verschobenen Spreizfolgen, also von Spreizfolgen, die einen Offset von N Bits aufweisen.

Gemäß einer vorteilhaften Ausführungsform der Erfindung wird das Verfahren zur Erzeugung der verschiedenen im UMTS-Standard definierten Scrambling-Codes eingesetzt. Scrambling-Codes sind Spreizfolgen, die unter anderem zur Unterscheidung der Signale dienen, welche von verschiedenen Basisstationen an eine Mobilstation gesendet werden. Die erfindungsgemäße Lösung eignet sich zur Erzeugung von um N Bits verschobenen Scrambling-Codes, also von Scrambling-Codes, welche einen Offset von N Bits aufweisen. Die erfindungsgemäße Lösung ermöglicht es, ad hoc eine Vielzahl unterschiedlicher Scrambling-Codes zu generieren.

Gemäß einer vorteilhaften Ausführungsform der Erfindung wird in dem CDMA-Übertragungssystem die Spreizcodierung zu einem anderen Zeitpunkt gestartet als die Signalübertragung, wobei der n Bit umfassende, N-fach iterierte Endzustand als Initialisierungszustand für die Erzeugung der zeitlich verschobenen Spreizfolge verwendet wird. Dies ermöglicht eine höhere Flexibilität beim zeitlichen Ablauf von Sende- und Empfangsvorgängen. Insbesondere kann der im Standard UMTS vorgesehene Compressed Mode mit geringem Aufwand implementiert werden.

Es ist von Vorteil, wenn durch eine gegebene Code-Nummer der Offset einer Spreizfolge festgelegt wird, wobei der n Bit umfassende, N-fach iterierte Endzustand als Initialisierungszustand für die Erzeugung der der Code-Nummer N zugeordneten Spreizfolge verwendet wird. Dadurch ist es möglich, eine große Zahl von Codes auf einfache Weise zu adressieren. Die Code-Nummer N, die zur Kennzeichnung eines Codes verwendet wird, dient gleichzeitig als maßgeblicher Parameter für die Codeerzeugung und kann direkt für die Codeerzeugung herangezogen werden. Zeitaufwendige Umrechnungen sind nicht erforderlich.

Nachfolgend wird die Erfindung anhand von mehreren in der Zeichnung dargestellten Ausführungsbeispielen weiter beschrieben. Es zeigen:

Fig. 1     das Schaltbild eines Schieberegisters vom Typ SSRG (Simple Shift Register Generator);

Fig. 2    die erfindungsgemäße Darstellung der n x n Matrix $T^N$, welche bei Multiplikation mit dem Anfangszustand direkt den N-fach iterierten Initialisierungszustand für die Erzeugung der verschobenen Pseudo-Noise-Folge liefert; und

Fig. 3    eine Tabelle, in der die Anzahl der benötigten Operationen in Abhängigkeit von dem gewünschten Offset N für das bisherige Verfahren und das erfindungsgemäße Verfahren miteinander verglichen werden.

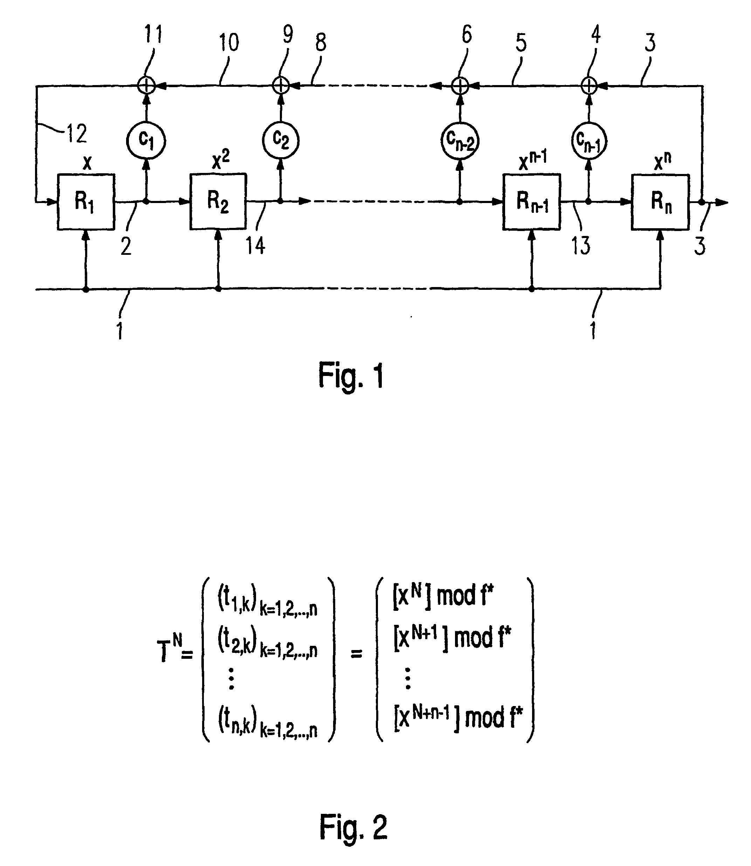

In Fig. 1 ist die Struktur eines Schieberegisters vom Typ SSRG (Simple Shift Register Generator) gezeigt. Das Schieberegister umfasst n Registerzellen $R_1$, $R_2$, ..., $R_{n-1}$, $R_n$, wobei der Registerinhalt einer Zelle jeweils die Werte 0 oder 1 annehmen kann. Über die gemeinsame Taktleitung 1 werden den Registerzellen Taktimpulse zugeführt. Mit jedem Taktimpuls wird der Inhalt einer Registerzelle in die nächstfolgende Registerzelle übernommen. Hierzu ist der Ausgang einer Registerzelle jeweils mit dem Eingang der nächstfolgenden Registerzelle verbunden. Beispielsweise ist der Ausgang der Registerzelle $R_1$ über die Signalleitung 2 mit dem Eingang der Registerzelle $R_2$ verbunden. Dadurch kann erreicht werden, dass die anfangs vorliegende Bitsequenz mit jedem Taktimpuls um eine Registerzelle bzw. um eine Bitposition nach rechts geschoben wird.

Das am Ausgang der Registerzelle $R_n$ abgreifbare Signal 3 wird durch eine Anzahl von XOR-Gattern 4, 6, ..., 9, 11 modifiziert, um das Signal 12 zu erhalten, das am Eingang der ersten Registerzelle $R_1$ anliegt. Die Art und Weise, wie das am Ausgang von $R_n$ abgreifbare Signal 3 modifiziert wird, um das Signal 12 zu erhalten, wird durch die Koeffizienten $c_1$, $c_2$, ..., $c_{n-2}$, $c_{n-1}$ festgelegt, welche jeweils den Wert 0 oder 1 annehmen können. Wenn $c_i$ (mit i = 1, 2, ..., n-1) den Wert 0 hat, dann bedeutet dies, dass das am Ausgang der Registerzelle $R_i$ abgreifbare Signal keinerlei Einfluss auf das Rückkopplungssignal hat. Wenn beispielsweise $c_{n-1} = 0$ ist, dann wird das Signal 3 durch das am Ausgang der Registerzelle $R_{n-1}$ abgreifbare Signal 13 nicht modifiziert. Das am ersten Eingang des XOR-Gatters 4 anliegende Signal 3 gelangt unverändert zum Ausgang des XOR-Gatters 4, so dass das Signal 5 dem Signal 3 entspricht. Wenn der Koeffizient $c_{n-1} = 0$ ist, dann kann das XOR-Gatter 4 daher auch weggelassen und durch eine direkte Verbindung zwischen dem Signal 3 und dem Signal 5 ersetzt werden.

Wenn ein Koeffizient $c_i$ (mit i = 1, 2, ..., n-1) dagegen gleich Eins ist, dann trägt das am Ausgang der Registerzelle $R_i$ abgreifbare Signal zum rückgekoppelten Signal bei. Wenn beispielsweise $c_2 = 1$ ist, dann wird das bisherige rückgekoppelte Signal 8 im XOR-Gatter 9 mit dem am Ausgang der Registerzelle $R_2$ abgreifbaren Signal 14 XOR-verknüpft, so dass man das modifizierte rückgekoppelte Signal 10 erhält. Da eine XOR-Verknüpfung als Modulo-Zwei-Addition beschrieben werden kann, sind die XOR-Gatter 4, 6, ..., 9, 11 in Fig. 1 als Modulo-Zwei-Addierer eingezeichnet.

Die Rekursionsvorschrift für ein Schieberegister der in Fig. 1 gezeigten Art wird durch ein charakteristisches Polynom der Form

$$f(x) = 1 + c_1 \cdot x + c_2 \cdot x^2 + ... + c_{n-1} \cdot x^{n-1} + x^n$$

vorgegeben, wobei die Koeffizienten $c_1$, $c_2$, ..., $c_{n-1}$ den in Fig. 1 eingezeichneten Koeffizienten entsprechen und insofern die Werte 0 oder 1 annehmen können. Im Bereich der Codierung bzw. Decodierung von Signalen werden als Polynome f(x) irreduzible Polynome verwendet. Irreduzible Polynome sind dadurch gekennzeichnet, dass sie sich nicht als Produkt von mindestens zwei Faktoren darstellen lassen, die ihrerseits auch Polynome mit einem Grad größer 0 über dem Körper GF(2) sind. Irreduzible Polynome lassen sich also nicht in Polynome von niedrigerem Grad faktorisieren.

Zum Zeitpunkt Null seien die Anfangswerte der Registerzellen $R_1$, $R_2$, ..., $R_n$ gegeben als $x_1(0)$, $x_2(0)$, ..., $x_n(0)$. Die Werte der Register $x_1(t+1)$, $x_2(t+1)$, ..., $x_n(t+1)$ zum Zeitpunkt t+1 lassen sich jeweils aus den Werten der Register $x_1(t)$, $x_2(t)$, ..., $x_n(t)$ zum Zeitpunkt t anhand folgender Rekursionsvorschrift herleiten:

$$
\begin{aligned}
x_n(t + 1) &= x_{n-1}(t), \\
x_{n-1}(t + 1) &= x_{n-2}(t), \\
&\vdots \\
x_2(t + 1) &= x_1(t), \\
x_1(t + 1) &= c_1 \cdot x_1(t) + c_2 \cdot x_2(t) + ... + c_{n-1} \cdot x_{n-1}(t) + x_n(t).
\end{aligned}
$$

Bei der hier verwendeten Addition handelt es sich um eine Modulo-Zwei-Addition, also um eine XOR-Operation. Wenn es sich bei f(x) um ein irreduzibles Polynom handelt, dann kann am Ausgang des Schieberegisters als Signal 3 eine sogenannte Pseudo-Noise-Folge

$$x_n(0), x_n(1), x_n(2), x_n(3), \dots$$

abgegriffen werden. Mit jedem Taktimpuls des Taktsignals 1 erscheint ein neuer Folgenwert am Ausgang des Schieberegisters.

Die Pseudo-Noise-Folgen, die sich mit der in Fig. 1 gezeigten Hardware erzeugen lassen, weisen geeignete Korrelationseigenschaften für die Signalcodierung auf. In CDMA-Verfahren wie UMTS oder IS-95 werden daher derartige Pseudo-Noise-Folgen zur sender- und empfängerseitigen Erzeugung von Spreizfolgen verwendet. Die in Fig. 1 gezeigte Schieberegisterstruktur stellt daher die geeignete Hardware für die Erzeugung von Spreizfolgen in Mobilstationen und Basisstationen dar, welche als Übertragungsstandard ein CDMA-Verfahren verwenden.

Der Registervektor

$$\begin{pmatrix} x_n(t) \\ x_{n-1}(t) \\ \vdots \\ x_2(t) \\ x_1(t) \end{pmatrix}$$

stellt den Inhalt der Registerzellen $R_1$, $R_2$, ... $R_n$ zum Zeitpunkt t dar. Wenn man die n x n Matrix T definiert als

$$T = \begin{pmatrix} 0 & 1 & 0 & \cdots & 0 & 0 \\ 0 & 0 & 1 & & & 0 \\ \vdots & & & \ddots & & \vdots \\ & & & & 1 & 0 \\ 0 & & & & 0 & 1 \\ 1 & c_{n-1} & c_{n-2} & \cdots & c_2 & c_1 \end{pmatrix},$$

dann lässt sich die Rekursionsvorschrift folgendermaßen formulieren:

$$\begin{pmatrix} x_n(t+1) \\ x_{n-1}(t+1) \\ \vdots \\ x_2(t+1) \\ x_1(t+1) \end{pmatrix} = T \cdot \begin{pmatrix} x_n(t) \\ x_{n-1}(t) \\ \vdots \\ x_2(t) \\ x_1(t) \end{pmatrix}.$$

Die n x n Matrix T wird auch als charakteristische Matrix der Rekursion bezeichnet. Eine einmalige Iteration der Code-Folge kann also als Multiplikation der Matrix T mit dem Registervektor dargestellt werden. Entsprechend lässt sich eine Verschiebung der Code-Folge um einen Offset N als Multiplikation des Registervektors mit der Matrix $T^N$ darstellen:

$$
\begin{pmatrix}
x_n(t+N) \\
x_{n-1}(t+N) \\
\vdots \\
x_2(t+N) \\
x_1(t+N)
\end{pmatrix}
= T^N \cdot
\begin{pmatrix}
x_n(t) \\
x_{n-1}(t) \\
\vdots \\
x_2(t) \\
x_1(t)
\end{pmatrix}
$$

Eine direkte Berechnung der N-ten Potenz der Matrix T wäre jedoch noch aufwendiger als die aus dem Stand der Technik bekannte Ausführung von N Vorab-Iterationen des Schieberegisters.

Im folgenden soll die Matrix $T^N$ mit einem schnellen und wenig aufwendigen Verfahren bestimmt werden. Dabei soll von der n x n Matrix T* ausgegangen werden, welche die transponierte Matrix der Matrix T ist. Die Matrix T* ist gegeben durch

$$
T^* =
\begin{pmatrix}
0 & 0 & 0 & \cdots & 1 \\
1 & 0 & 0 & \cdots & c_{n-1} \\
0 & 1 & 0 & & \vdots \\
0 & \cdots & \ddots & 0 & c_2 \\
0 & 0 & \cdots & 1 & c_1
\end{pmatrix}.
$$

Die Erfindung beruht auf der Beobachtung, dass die Multiplikation mit der transponierten Matrix T* einer Multiplikation mit der unabhängigen Variablen x im Restklassenring des Polynomrings modulo f* entspricht. Das Polynom

$f^*(x) = 1 + c_{n-1} \cdot x + c_{n-2} \cdot x^2 + ... + c_1 \cdot x^{n-1} + x^n$

wird dabei durch Spiegelung der Koeffizienten des Polynoms

$$f(x) = 1 + c_1 \cdot x + c_2 \cdot x^2 + ... + c_{n-1} \cdot x^{n-1} + x^n$$

erhalten. Man kann dies auch schreiben als

$$f^*(x) = x^n \cdot f(x^{-1}).$$

Dass die Multiplikation mit T* einer Multiplikation mit x modulo f* entspricht, kann man sich folgendermaßen klar machen:

Jede Restklasse modulo f* ist eine Linearkombination der "kanonischen Basis" [1], [x], ..., [$x^{n-1}$] modulo f*. Daher genügt es zu zeigen, dass T* auf diese Basis so wirkt wie die Multiplikation mit x modulo f*.

Die Äquivalenzklasse [1] modulo f* ist gegeben durch den Vektor

$$\begin{pmatrix} 1 \\ 0 \\ 0 \\ 0 \\ 0 \end{pmatrix}.$$

Nach Multiplikation mit T* erhält man den Vektor

$$\begin{pmatrix} 0 \\ 1 \\ 0 \\ 0 \\ 0 \end{pmatrix},$$

dies entspricht der Äquivalenzklasse [x] modulo f*. In derselben Weise gilt dies für alle Äquivalenzklassen [1], [x],... $[x^{n-2}]$ modulo f*. Die letzte Äquivalenzklasse $[x^{n-1}]$ modulo f* entspricht dem Vektor

$$\begin{pmatrix} 0 \\ 0 \\ 0 \\ 0 \\ 1 \end{pmatrix},$$

dieser wird bei Multiplikation mit T* abgebildet auf den Vektor

$$\begin{pmatrix} 1 \\ c_{n-1} \\ \vdots \\ c_2 \\ c_1 \end{pmatrix},$$

und dies entspricht der Äquivalenzklasse
$[1 + c_{n-1} \cdot x + c_{n-2} \cdot x^2 + ... + c_1 \cdot x^{n-1}]$ mod f*. Aber diese Äquivalenzklasse ist genau die Äquivalenzklasse $[x^n]$ modulo f*, denn

$$[x^n] \bmod f^* =$$

$$= [x^n + f^*] \bmod f^* =$$

$$= [x^n + 1 + c_{n-1} \cdot x + c_{n-2} \cdot x^2 + ... + c_1 \cdot x^{n-1} + x^n] \bmod f^* =$$

$$= [1 + c_{n-1} \cdot x + c_{n-2} \cdot x^2 + ... + c_1 \cdot x^{n-1}] \bmod f^*$$

Hier bedeutet "+" jeweils die Addition im entsprechenden Körper GF(2) mit zwei Elementen, d.h. das "+" entspricht dem "XOR".

Damit ist für jedes Basiselement die Multiplikation mit T* dasselbe wie die Multiplikation mit x modulo f*, und daher ist auch für jedes Polynom die Multiplikation mit T* dasselbe wie die Multiplikation mit x modulo f*.

Damit ist auch die Multiplikation mit $(T^*)^N$ dasselbe wie die Multiplikation mit $x^N$ modulo f*.

Diese Eigenschaft kann ausgenutzt werden, um die Matrix $(T^*)^N$ zu bestimmen. Die Matrix $(T^*)^N$ beschreibt eine lineare Transformation, die das Polynom $[x^{j-1}]$ mod f* (mit j = 1, 2, ... n) in das mit $x^N$ modulo f* multiplizierte Polynom $[x^{N+j-1}]$ mod f* überführt. Dabei wird das Polynom $[x^{j-1}]$ mod f*, genauer gesagt das die Restklasse $[x^{j-1}]$ mod f* repräsentierende Polynom mit Grad kleiner n, durch den j-ten Einheitsvektor dargestellt. Das Polynom [1] mod f* wird also durch den ersten Einheitsvektor

$$\begin{pmatrix} 1 \\ 0 \\ \vdots \\ 0 \end{pmatrix},$$

das Polynom [x] mod f* durch den zweiten Einheitsvektor

$$\begin{pmatrix} 0 \\ 1 \\ \vdots \\ 0 \end{pmatrix}$$

dargestellt, etc. Die Multiplikation dieser Einheitsvektoren mit der Matrix $(T^*)^N$ überführt den ersten Einheitsvektor in den Spaltenvektor $[x^N]$ mod f*, den zweiten Einheitsvektor in den Spaltenvektor $[x^{N+1}]$ mod f*, und allgemein den j-ten Einheitsvektor in den Spaltenvektor $[x^{N+j-1}]$ mod f*. Daher besitzt die Matrix $(T^*)^N$ die folgende Struktur:

$$(T^*)^N = \left( \left[ x^N \right] \bmod f^*, \left[ x^{N+1} \right] \bmod f^*, \cdots \left[ x^{N+n-1} \right] \bmod f^* \right).$$

Diese Notation bedeutet, dass die j-te Spalte der Matrix $(T^*)^N$ durch die Koeffizienten von demjenigen Vertreter der Restklasse $[x^{N+j-1}]$ mod f* gebildet wird, der den kleinsten Grad aufweist. Wenn man an diese Matrix von rechts den j-ten Einheitsvektor heranmultipliziert, dann erhält man den gewünschten Spaltenvektor $[x^{N+j-1}]$ mod f* .

Bei der Matrix T dürfen die Operationen des Transponierens und des Potenzierens vertauscht werden. Es gilt also

$$(T^*)^N = (T^N)^*.$$

Daher ergibt sich für die zu bestimmende Matrix $T^N$

$$T^N = \left(t_{j,k}\right)_{j,k=1,2,\dots,n} = \begin{pmatrix} \left[x^N\right] \bmod f^* \\ \left[x^{N+1}\right] \bmod f^* \\ \vdots \\ \left[x^{N+n-1}\right] \bmod f^* \end{pmatrix}.$$

Die j-te Zeile der Matrix $T^N$ wird durch die Koeffizienten von demjenigen Vertreter der Restklasse $[x^{N+j-1}]$ mod f* gebildet, der den kleinsten Grad aufweist. Diese Struktur der Matrix $T^N$ ist in Fig. 2 dargestellt.

Damit ist die Berechnung der Matrix $T^N$ abgeschlossen.

Die so ermittelte Matrix $T^N$ kann nun in die Iterationsvorschrift

$$\begin{pmatrix} x_n(t+N) \\ x_{n-1}(t+N) \\ \vdots \\ x_2(t+N) \\ x_1(t+N) \end{pmatrix} = T^N \cdot \begin{pmatrix} x_n(t) \\ x_{n-1}(t) \\ \vdots \\ x_2(t) \\ x_1(t) \end{pmatrix}$$

eingesetzt werden. Für die Iterationsvorschrift zur Berechnung des N-fach iterierten Zustands ergibt sich damit:

$$\begin{pmatrix} x_n(t+N) \\ x_{n-1}(t+N) \\ \vdots \\ x_2(t+N) \\ x_1(t+N) \end{pmatrix} = \begin{pmatrix} \left[x^N\right] \bmod f^* \\ \left[x^{N+1}\right] \bmod f^* \\ \vdots \\ \left[x^{N+n-1}\right] \bmod f^* \end{pmatrix} \cdot \begin{pmatrix} x_n(t) \\ x_{n-1}(t) \\ \vdots \\ x_2(t) \\ x_1(t) \end{pmatrix}$$

Zur Berechnung der Matrixelemente $(t_{j,k})_{k=1,2,\dots,n}$ der j-ten Zeile der Matrix $T^N$ müssen die Koeffizienten von demjenigen Polynom bestimmt werden, das einerseits zur Restklasse $[x^{N+j-1}]$ mod f* gehört und andererseits einen Grad kleiner als n besitzt. Dies kann von einem sogenannten Square-and-Multiply Algorithmus geleistet werden. Derartige Algorithmen können ausgehend von dem Restklassenpolynom g = [x] mod f*, das als Eingangsgröße des Algorithmus dient, das Restklassenpolynom $[x^M]$ mod f* bestimmen, wobei M eine beliebige natürliche Zahl ist.

Es sei $M = M_r M_{r-1} M_{r-2} \dots M_1 M_0$ eine Binärdarstellung der natürlichen Zahl M, wobei das höchstwertige Bit $M_r$ = 1 ist. Dann schreibt sich der entsprechende Square-and-Multiply Algorithmus folgendermaßen:

1. Set y←g
2. For i from r-1 downto 0 do

2.1 Set $y \leftarrow y^2$ mod f*
2.2 If $M_i$ = 1 then set $y \leftarrow g \cdot y$ mod f*

3. Output y

In Zeile 2.1 wird die Square-Operation, und in Zeile 2.2, falls $M_i$ = 1 ist, die Multiply-Operation durchgeführt. Der Operator "•" bezeichnet dabei die Multiplikation zweier Restklassen und liefert einen Vertreter der resultierenden Restklasse. Nach vollständiger Durchführung des Algorithmus erhält man als Output y den Vertreter der Restklasse $[x^M]$ mod f* mit dem niedrigsten Grad. Die Zahl der benötigten Rechenschritte und damit auch die benötigte Rechenzeit hängt logarithmisch von M ab.

Entsprechend einer ersten Ausführungsform der Erfindung werden die Matrixelemente der Matrix $T^N$ bestimmt, indem für jede Zeile einmal der Square-and-Multiply Algorithmus ausgeführt wird. Zur Berechnung der Matrixelemente der j-ten Zeile welche durch die Koeffizienten des Restklassenpolynoms $[x^{N+j-1}]$ mod f* gegeben ist, wird also der Square-and-Multiply Algorithmus für M = N+j-1 aufgerufen. Durch n-maliges Ausführen des Square-and-Multiply Algorithmus lassen sich so sämtliche Matrixelemente bestimmen.

Alternativ dazu werden gemäß einer zweiten Ausführungsform der Erfindung lediglich die Matrixelemente $(t_{1,k})_{k=1,2,\dots,n}$ der ersten Zeile der Matrix mittels des Square-and-Multiply Algorithmus bestimmt, während die Matrixelemente der Zeilen 2 bis n durch Iterieren der Matrixelemente der ersten Zeile gewonnen werden. Bei dieser Ausführungsform der Erfindung muss der Square-and-Multiply Algorithmus nur einmal aufgerufen werden. Dadurch kann bei dieser Ausführungsform der Erfindung der Rechenaufwand weiter verringert werden.

Zunächst wird also der Square-and-Multiply Algorithmus für M = N aufgerufen, um die erste Zeile $(t_{1,1}, t_{1,2}, \dots t_{1,n-1}, t_{1,n})$ der Matrix $T^N$ zu bestimmen. Diese Zeile besteht aus den Koeffizienten des Vertreters der Restklasse $[x^N]$ mod f*, es gilt also

$$[x^N] \text{ mod } f^* = [t_{1,1} + t_{1,2} \cdot x + t_{1,3} \cdot x^2 + \dots + t_{1,n} \cdot x^{n-1}] \text{ mod } f^*.$$

Ausgehend von dieser ersten Zeile der Matrix $T^N$ sollen nun die folgenden Zeilen der Matrix iterativ bestimmt werden. Für die Bestimmung der Matrixelemente der nächstfolgenden, j-ten Zeile aus der vorhergehenden, (j-1)-ten Zeile müssen jeweils zwei Schritte durchgeführt werden. In einem ersten Schritt werden die Matrixelemente der (j-1)-ten Zeile um eine Position nach rechts verschoben, was einer Multiplikation mit x entspricht. Es gilt also für j = 2, 3,...,n:

$$(t_{j,1}, t_{j,2}, t_{j,3}, \dots, t_{j,n-1}, t_{j,n}) := (0, t_{j-1,1}, t_{j-1,2}, \dots, t_{j-1,n-1})$$

Dabei wird das letzte Element der (j-1)-ten Zeile, das Matrixelemente $t_{j-1,n}$ , aus der Matrix herausgeschoben. Falls das Matrixelement $t_{j-1,n}$ jedoch gleich 1 ist, wird durch dieses Matrixelement $t_{j-1,n}$ eine Rückkopplung und somit eine Modifikation der Matrixelemente der j-ten Zeile bewirkt. Im zweiten Schritt muss deshalb zunächst abgefragt werden, ob $t_{j-1,n}$ = 1 ist. Falls $t_{j-1,n}$ = 1 ist, wird eine XOR-Addition des gespiegelten Polynoms f*(x) und der im ersten Schritt erhaltenen Matrixelemente j-ten Zeile $(t_{j,1}, t_{j,2}, \dots, t_{j,n-1}, t_{j,n})$ durchgeführt. Das gespiegelte Polynom

$$f^*(x) = 1 + c_{n-1} \cdot x + c_{n-2} \cdot x^2 + \dots + x^n$$

lässt sich auch schreiben als

$$f^*(x) = f_1 + f_2 \cdot x + f_3 \cdot x^2 + \dots + f_{n+1} \cdot x^n$$

und kann daher durch den Bitvektor $(f_1, f_2, \dots, f_{n-1}, f_n, f_{n+1})$ dargestellt werden. Für den Fall $t_{j-1,n}$ = 1 ist daher folgende XOR-Addition durchzuführen:

$$t_{j,k} := t_{j,k} \oplus f_k ,$$

wobei k = 1, 2, ..., n die verschiedenen Elemente der j-ten Zeile bezeichnet, und wobei der Operator "$\oplus$" für die XOR-Addition steht.

Auf diese Weise können sämtliche Matrixelemente der Matrix

$$T^N = (t_{j,k})_{j,k=1,2,..,n}$$

bestimmt werden.

Die beiden Schritte des Rechtsverschiebens und der XOR-Addition von f* entsprechen dabei genau den Operationen, die ein Schieberegister vom Typ MSRG (Modular Shift Register Generator) pro Taktimpuls durchführen würde. Die zur Bestimmung der Matrixelemente notwendigen Iterationen werden aber rein rechnerisch mittels eines Prozessors durchgeführt.

Eine der wichtigsten Anwendungen der Erfindung liegt in der Erzeugung von Spreizfolgen für Übertragungssysteme, welche entsprechend einem CDMA-Übertragungsverfahren arbeiten. Bei diesen Spreizfolgen handelt es sich um Pseudo-Noise-Folgen, welche entweder von einer Schieberegisteranordnung vom Typ SSRG, oder aber von einem digitalen Signalprozessor erzeugt werden.

Mit Hilfe der Erfindung ist es möglich, rechnerisch den Inhalt der Schieberegisteranordnung zu bestimmen, der sich nach Durchführung von N Iterationen ergeben würde. Dieser um N Bit verschobene Initialisierungszustand kann dann in die Registerzellen der Schieberegisteranordnung eingeschrieben werden. Ausgehend von diesem Initialisierungszustand erzeugt die Schieberegisteranordnung dann eine um N Bits verschobene Pseudo-Noise-Folge, welche als Spreizfolge eingesetzt werden kann.

Die Definitionen der für den UMTS-Mobilfunk zu verwendenden Codierungen finden sich in "3GPP: Spreading and modulation (FDD)", 3rd Generation Partnership Project TS 25.213, Release 1999. Unter anderem werden hier die sogenannten Scrambling-Codes definiert, mit denen die ausgesendeten Signale codiert werden. Diese Scrambling-Codes dienen unter anderem zur Unterscheidung der Signale, welche von verschiedenen Basisstationen zu einer Mobilstation gesendet werden (Downlink). Dabei werden im Downlink-Modus, also beim Senden eines Signals von der Basisstation zur Mobilstation andere Codes verwendet als beim Senden eines Signals vom Mobilfunkbenutzer zur Basisstation (Uplink). Darüber hinaus werden die verschiedenen logischen Kanäle, etwa zur kontinuierlichen Daten-/ Sprachübertragung, zur gebündelten Übertragung von Daten als Pakete und zum Abgleich zwischen Sender und Empfänger, mit verschiedenen Scrambling-Codes codiert. Dabei kann jeweils aus einer Familie von Codes ausgewählt werden, wobei die Codes innerhalb einer Familie durch ihre Code-Nummern unterschieden werden.

Im wesentlichen existieren in UMTS drei verschiedene Typen von Scrambling-Codes, welche jeweils aus einer Folge von komplexen Zahlen bestehen. Die sogenannten langen Codes bestehen aus 38400 Zahlen und weisen innerhalb eines Zeitrahmens von 10 ms keine Wiederholungen auf. Daneben gibt es die sogenannten kurzen Codes, welche sich alle 256 Zeichen wiederholen, sowie die sogenannten Preamble-Codes, welche aus 4096 bestehen. Die langen Scrambling-Codes weisen die höchste Komplexität auf. Sie sind im UMTS-Standard mit Hilfe von Pseudo-Noise-Folgen definiert. Im Downlink-Modus, also beim Senden eines Signals von der Basisstation zur Mobilstation, werden zwei verschiedene Pseudo-Noise-Folgen verwendet, wobei die zugehörigen irreduziblen Polynome den Grad 18 besitzen und gegeben sind durch $f(x) = 1 + x^7 + x^{18}$ und $f(x) = 1 + x^5 + x^7 + x^{10} + x^{18}$.

Für den Fall, dass kein Offset vorgesehen ist, wird der Anfangszustand, also die anfängliche Registerbelegung der Schieberegisteranordnung, durch die technische Spezifikation des 3rd Generation Partnership Project explizit vorgegeben. Der Scrambling-Code mit Nummer N ergibt sich aus diesem Code durch Berücksichtigung eines zusätzlichen Offsets von N Bits.

Bei Verwendung eines Square-and-Multiply Verfahrens zur Berechnung von Restklassen in Polynomringen lässt sich das erfindungsgemäße Verfahren zur Bestimmung eines N-fach iterierten Zustands unter alleiniger Verwendung von Shift-Operationen implementieren. Das Verfahren des Stands der Technik, also die Abarbeitung von N Vorab-Iterationen, kann ebenfalls mit Hilfe von Shift-Operationen realisiert werden.

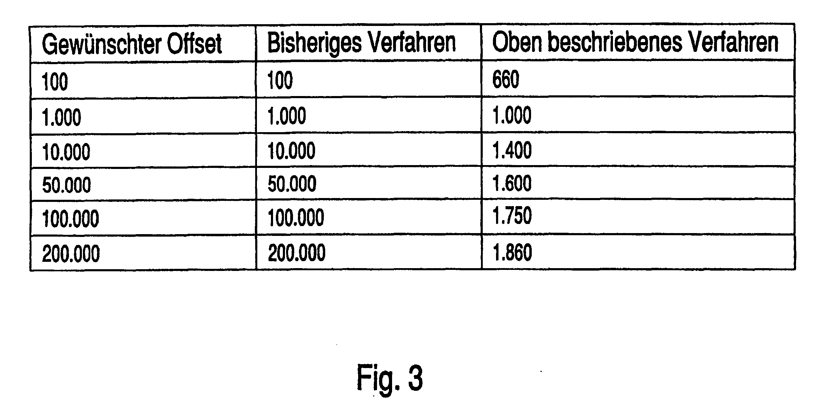

Fig. 3 zeigt eine Tabelle, in der für verschiedene Werte des Offsets N die Zahl der beim bisherigen Verfahren benötigten Operationen (mittlere Spalte) sowie die Zahl der beim erfindungsgemäßen Verfahren benötigten Operationen (rechte Spalte) angegeben ist. In technischer Realisierung ist die Anzahl der benötigten Operationen in etwa proportional zur benötigten Zeit. Man erkennt, dass das bisherige Verfahren nur für sehr kleine Werte des Offsets N schnell genug ist. Ein großer Vorteil des neuen Verfahrens liegt darin, dass die Anzahl der benötigten Operationen logarithmisch vom gewünschten Offset N abhängt. Dies führt zu einer signifikanten Reduzierung des rechnerischen und zeitlichen Aufwands. Darüber hinaus lässt sich der rechnerische und zeitliche Aufwand vorab wesentlich besser kalkulieren als bei dem Verfahren des Stands der Technik. Gerade für Mobilfunkanwendungen, welche stets in Echtzeit ablaufen müssen, ist dies ein gravierender Vorteil.

**Patentansprüche**

1. Verfahren zur Bestimmung eines n Bit umfassenden, N-fach iterierten Endzustands einer Schieberegisteranordnung aus einem gegebenen, n Bit umfassenden Anfangszustand der Schieberegisteranordnung, wobei die Iterationsvorschrift für die Schieberegisteranordnung durch das charakteristische Polynom

$$f(x) = 1 + c_1 \cdot x + c_2 \cdot x^2 + ... + c_{n-1} \cdot x^{n-1} + x^n$$

mit $c_1, c_2,...c_{n-1} \in \{0;1\}$ gegeben ist,
**gekennzeichnet durch** folgende Schritte:

    a) Bestimmen des Polynoms

$$f^*(x) = 1 + c_{n-1} \cdot x + c_{n-2} \cdot x^2 + ... + x^n$$

    **durch** Spiegelung der Koeffizienten des Polynoms

$$f(x) = 1 + c_1 \cdot x + c_2 \cdot x^2 + ... + c_{n-1} \cdot x^{n-1} + x^n \; ;$$

    b) für j = 1,...n, Bestimmen von demjenigen Vertreter der Restklasse

$$[x^{N+j-1}] \bmod f^*,$$

    dessen Grad kleiner als n ist;

    c) Multiplizieren der Bitsequenz des Anfangszustands mit einer Matrix, deren j-te Zeile beziehungsweise j-te Spalte für j = 1,...n **durch** die Koeffizienten des in Schritt b) bestimmten Vertreters der Restklasse

$$[x^{N+j-1}] \bmod f^*$$

    gegeben ist.

**2.** Verfahren nach Anspruch 1,
**dadurch gekennzeichnet, dass**
die Vertreter der Restklassen

$$[x^N] \bmod f^*, \ [x^{N+1}] \bmod f^*,... \ [x^{N+n-1}] \bmod f^*$$

jeweils explizit mittels eines geeigneten Algorithmus, insbesondere mittels eines Square-and-Multiply Algorithmus, berechnet werden.

**3.** Verfahren nach Anspruch 1,
**dadurch gekennzeichnet, dass** lediglich der Vertreter der Restklasse

$$[x^N] \bmod f^*$$

explizit mittels eines geeigneten Algorithmus, insbesondere mittels eines Square-and-Multiply Algorithmus, berechnet wird, und dass die Vertreter der Restklassen

$$[x^{N+j-1}] \bmod f^*$$

mit j = 2,...n durch (n-1) rechnerisch durchgeführte Iterationen aus den Koeffizienten des Vertreters der Restklasse

$$[x^N] \bmod f^*$$

erhalten werden.

**4.** Verfahren nach Anspruch 3,
**dadurch gekennzeichnet, dass**
die Vertreter der Restklassen

$$[x^{N+j-1}] \bmod f^*$$

mit j = 2,...n durch (n-1) rechnerisch durchgeführten Iterationen einer Schieberegisteranordnung vom MSRG-Typ aus den Koeffizienten des Vertreters der Restklasse

$$[x^N] \bmod f^*$$

erhalten werden, wobei die Iterationsvorschrift für die Schieberegisteranordnung durch das charakteristische Polynom

$$f^*(x) = 1 + c_{n-1} \cdot x + c_{n-2} \cdot x^2 + ... + x^n$$

gegeben ist.

**5.** Verfahren nach einem der vorhergehenden Ansprüche,
**dadurch gekennzeichnet, dass**
der n Bit umfassende, N-fach iterierte Endzustand als Initialisierungszustand für die Erzeugung einer um N Bit verschobenen Pseudo-Noise-Folge verwendet wird.

**6.** Verfahren nach einem der vorhergehenden Ansprüche,
**dadurch gekennzeichnet, dass**
der n Bit umfassende, N-fach iterierte Endzustand als Initialisierungszustand in eine n Schieberegisterzellen ($R_1$, $R_2$,...,$R_n$) umfassende Schieberegisteranordnung eingeschrieben wird.

**7.** Verfahren nach Anspruch 6,
**dadurch gekennzeichnet, dass**
es sich bei der Schieberegisteranordnung um eine n Schieberegisterzellen ($R_1$,$R_2$,...,$R_n$) umfassende Schieberegisteranordnung vom Typ SSRG handelt, deren Struktur durch das charakteristische Polynom

$$f(x) = 1 + c_1 \cdot x + c_2 \cdot x^2 + ... + c_{n-1} \cdot x^{n-1} + x^n$$

gegeben ist.

**8.** Verfahren nach einem der vorhergehenden Ansprüche,
**dadurch gekennzeichnet, dass**
das Verfahren in CDMA-Übertragungssystemen, insbesondere in CDMA-Übertragungssystemen mit den Übertragungsstandards UMTS oder IS-95 zur Erzeugung einer Spreizfolge mit einem Offset von N Bits verwendet wird.

**9.** Verfahren nach Anspruch 8,
**dadurch gekennzeichnet, dass**
das Verfahren zur Erzeugung der im UMTS-Standard definierten Scrambling-Codes eingesetzt wird.

**10.** Verfahren nach Anspruch 8 oder Anspruch 9,
**dadurch gekennzeichnet, dass**
die Spreizfolge zur senderseitigen Spreizcodierung der gesendeten Signale verwendet wird.

**11.** Verfahren nach Anspruch 8 oder Anspruch 9,
**dadurch gekennzeichnet, dass**
die Spreizfolge zur empfängerseitigen Decodierung der empfangenen Signale eingesetzt wird.

**12.** Verfahren nach einem der Ansprüche 8 bis 11,
**dadurch gekennzeichnet, dass**
in dem CDMA-Übertragungssystem die Spreizcodierung zu einem anderen Zeitpunkt gestartet wird als die Signalübertragung, wobei der n Bit umfassende, N-fach iterierte Endzustand als Initialisierungszustand für die Erzeugung der zeitlich verschobenen Spreizfolge verwendet wird.

**13.** Verfahren nach einem der Ansprüche 8 bis 11,
**dadurch gekennzeichnet, dass**
durch eine gegebene Code-Nummer der Offset einer Spreizfolge festgelegt wird, wobei der n Bit umfassende, N-fach iterierte Endzustand als Initialisierungszustand für die Erzeugung der der Code-Nummer N zugeordneten Spreizfolge verwendet wird.

**14.** Vorrichtung zur Bestimmung eines n Bit umfassenden, N-fach iterierten Endzustands einer Schieberegisteranordnung aus einem gegebenen, n Bit umfassenden Anfangszustand der Schieberegisteranordnung, wobei die Iterationsvorschrift für die Schieberegisteranordnung durch das charakteristische Polynom

$$f(x) = 1 + c_1 \cdot x + c_2 \cdot x^2 + ... + c_{n-1} \cdot x^{n-1} + x^n$$

mit $c_1, c_2, ... C_{n-1} \in \{0; 1\}$ gegeben ist, mit

-    Mitteln zur Bestimmung des Polynoms

$$f^*(x) = 1 + c_{n-1} \cdot x + c_{n-2} \cdot x^2 + ... + x^n$$

durch Spiegelung der Koeffizienten des Polynoms

$$f(x) = 1 + c_1 \cdot x + c_2 \cdot x^2 + ... + c_{n-1} \cdot x^{n-1} + x^n;$$

-    Mitteln zur Restklassenbestimmung, welche für j = 1,...,n jeweils denjenigen Vertreter der Restklasse

$$[x^{N+j-1}] \bmod f^*$$

bestimmen, dessen Grad kleiner als n ist,
-    Mitteln zur Multiplikation der Bitsequenz des Anfangszustands mit einer Matrix, deren j-te Zeile beziehungsweise deren j-te Spalte für j = 1,...,n durch die Koeffizienten des Vertreters der Restklasse

$$[x^{N+j-1}] \bmod f^*$$

gebildet wird, dessen Grad kleiner als n ist.

**15.** Vorrichtung nach Anspruch 14,
**dadurch gekennzeichnet, dass**
die Mittel zur Restklassenbestimmung die Vertreter der Restklassen

$$[x^N] \bmod f^*, [x^{N+1}] \bmod f^*,... [x^{N+n-1}] \bmod f^*$$

jeweils explizit mittels eines geeigneten Algorithmus, insbesondere mittels eines Square-and-Multiply Algorithmus, berechnen.

**16.** Vorrichtung nach Anspruch 14,
**dadurch gekennzeichnet, dass**
die Mittel zur Restklassenbestimmung lediglich den Vertreter der Restklasse

$$[x^N] \bmod f^*$$

explizit mittels eines geeigneten Algorithmus, insbesondere mittel eines Square-and-Multiply Algorithmus, berechnen, und dass die Mittel zur Restklassenbestimmung die Vertreter der Restklassen

$$[x^{N+j-1}] \bmod f^*$$

mit j = 2,...,n durch (n-1) rechnerisch durchgeführte Iterationen aus den Koeffizienten des Vertreters der Restklasse

$$[x^N] \bmod f^*$$

erhalten.

**17.** Vorrichtung nach Anspruch 16,
**dadurch gekennzeichnet, dass**
die Mittel zur Restklassenbestimmung die Vertreter der Restklassen

$$[x^{N+j-1}] \bmod f^*$$

mit j = 2,...,n durch (n-1) rechnerisch durchgeführte Iterationen einer Schieberegisteranordnung von MSRG-Typ aus den Koeffizienten des Vertreters der Restklasse

$$[x^N] \bmod f^*$$

erhalten, wobei die Iterationsvorschrift für die Schieberegisteranordnung durch das charakteristische Polynom

$$f^*(x) = 1 + c_{n-1} \cdot x + c_{n-2} \cdot x^2 + ... + x^n$$

gegeben ist.

**18.** Vorrichtung nach einem der Ansprüche 14 bis 17,
**dadurch gekennzeichnet, dass**
die Vorrichtung zur Bestimmung eines n Bit umfassenden, N-fach iterierten Endzustands den Endzustand als Initialisierungszustand in eine n Schieberegisterzellen $(R_1, R_2,...,R_n)$ umfassende Schieberegisteranordnung schreibt.

**19.** Vorrichtung nach Anspruch 18,
**dadurch gekennzeichnet, dass**
es sich bei der Schieberegisteranordnung um eine n Schieberegisterzellen $(R_1, R_2,...,R_n)$ umfassende Schieberegisteranordnung vom Typ SSRG handelt, deren Struktur durch das charakteristische Polynom

$$f(x) = 1 + c_1 \cdot x + c_2 \cdot x^2 + ... + c_{n-1} \cdot x^{n-1} + x^n$$

gegeben ist.

**20.** Verwendung einer Vorrichtung nach einem der Ansprüche 14 bis 19 zur Erzeugung einer Spreizfolge mit einem Offset mit N Bits in einem CDMA-Übertragungssystem, insbesondere in einem CDMA-Übertragungssystem entsprechend einem der Übertragungsstandards UMTS oder IS-95.

**21.** Verwendung nach Anspruch 20,
**dadurch gekennzeichnet, dass**
die Spreizfolge zur senderseitigen Spreizcodierung der zu sendenden Signale eingesetzt wird.

**22.** Verwendung nach Anspruch 20,
**dadurch gekennzeichnet, dass**
die Spreizfolge zur empfängerseitigen Decodierung der empfangenen Signale eingesetzt wird.

**23.** Verwendung nach einem der Ansprüche 20 bis 22,
**dadurch gekennzeichnet, dass**
in dem CDMA-Übertragungssystem die Spreizcodierung zu einem anderen Zeitpunkt gestartet wird als die Signalübertragung, wobei der n Bit umfassende, N-fach iterierte Endzustand als Initialisierungszustand für die Erzeugung der zeitlich verschobenen Spreizfolge eingesetzt wird.

**24.** Verwendung nach einem der Ansprüche 20 bis 22,
**dadurch gekennzeichnet, dass**
durch eine gegebene Code-Nummer der Offset einer Spreizfolge festgelegt wird, wobei der n Bit umfassende, N-fach iterierte Endzustand als Initialisierungszustand für die Erzeugung der der Code-Nummer N zugeordneten Spreizfolge eingesetzt wird.

**Claims**

**1.** Method for determination of an end state, which has n bits and is iterated N times, of a shift register arrangement from a given initial state, which has n bits, of the shift register arrangement, with the iteration rule for the shift register arrangement being given by the characteristic polynomial

$$f(x) = 1 + c_1 \cdot x + c_2 \cdot x^2 + ... + c_{n-1} \cdot x^{n-1} + x^n$$

where $c_1, c_2, ... c_{n-1} \in \{0;1\}$,
**characterized by** the following steps:

a) determination of the polynomial

$$f^*(x) = 1 + c_{n-1} \cdot x + c_{n-2} \cdot x^2 + ... + x^n$$

by reflecting the coefficients of the polynomial

$$f(x) = 1 + c_1 \cdot x + c_2 \cdot x^2 + ... + c_{n-1} \cdot x^{n-1} + x^n$$

b) for j=1,...n, determination of that representative of the remaining class

$$[x^{N+j-1}] \bmod f^*,$$

whose degree is less than n;

c) multiplication of the bit sequence of the initial state by a matrix whose j-th row or j-th column for j=1,...,n is given by the coefficients of the representative of the remaining class as determined in step b)

$$[x^{N+j-1}] \bmod f^*$$

**2.** Method according to Claim 1,
**characterized in that**
the representatives of the remaining classes

$$[x^N] \bmod f^*, [x^{N+1}] \bmod f^*, \dots [x^{N+n-1}] \bmod f^*$$

are each calculated explicitly by means of a suitable algorithm, in particular by means of a square and multiply algorithm.

**3.** Method according to Claim 1,
**characterized in that**
only the representative of the remaining class

$$[x^N] \bmod f^*$$

is calculated explicitly by means of a suitable algorithm, in particular by means of a square and multiply algorithm, and **in that** the representatives of the remaining classes

$$[x^{N+j-1}] \bmod f^*$$

where j=2,...,n are obtained by (n-1) calculated iterations from the coefficients of the representative of the remaining class

$$[x^N] \bmod f^*$$

**4.** Method according to Claim 3,
**characterized in that**
the representatives of the remaining classes

$$[x^{N+j-1}] \bmod f^*$$

where j=2,...,n are obtained by (n-1) calculated iterations of a shift register arrangement of the MSRG type from the coefficients of the representative of the remaining class

$$[x^N] \bmod f^*$$

where the iteration rule for the shift register arrangement is given by the characteristic polynomial

$$f^*(x) = 1 + c_{n-1} \cdot x + c_{n-2} \cdot x^2 + \dots + x^n$$

**5.** Method according to one of the preceding claims,
**characterized in that**
the end state, which has n bits and is iterated N times, is used as an initialization state for the production of a pseudo-noise sequence which is shifted through N bits.

**6.** Method according to one of the preceding claims,
**characterized in that**
the end state, which has n bits and is iterated N times, is written as the initialization state to a shift register arrangement which comprises n shift register cells ($R_1$, $R_2$, ..., $R_n$).

**7.** Method according to Claim 6,

**characterized in that**

the shift register arrangement is a shift register arrangement of the SSRG type which comprises n shift register cells $(R_1, R_2, ..., R_n)$ and whose structure is given by the characteristic polynomial

$$f(x) = 1 + c_1 \cdot x + c_2 \cdot x^2 + ... + c_{n-1} \cdot x^{n-1} + x^n$$

8. Method according to one of the preceding claims,
   **characterized in that**
   the method is used in order to produce a spreading sequence with an offset of N bits in CDMA transmission systems, in particular CDMA transmission systems based on the UMTS or IS-95 transmission standards.

9. Method according to Claim 8,
   **characterized in that**
   the method is used for production of the scrambling codes which are defined in the UMTS standard.

10. Method according to Claim 8 or Claim 9,
    **characterized in that**
    the spreading sequence is used for transmitter-end spread coding of the transmitted signals.

11. Method according to Claim 8 or Claim 9,
    **characterized in that**
    the spreading sequence is used for receiver-end decoding of the received signals.

12. The method according to one of claims 8 to 11,
    **characterized in that**
    the spread coding is started in the CDMA transmission system at a different time than the signal transmission, with the end state, which has n bits and is iterated N times, being used as the initialization state for the production of the time-shifted spreading sequence.

13. Method according to one of claims 8 to 11,
    **characterized in that**
    a given code number defines the offset of a spreading sequence, with the end state, which has n bits and is iterated N times, being used as the initialization state for the production of the spreading sequence which is associated with the code number N.

14. Apparatus for determination of an end state, which has n bits and is iterated N times, of a shift register arrangement from a given initial state, which has n bits, of the shift register arrangement, with the iteration rule for the shift register arrangement being given by the characteristic polynomial

$$f(x) = 1 + c_1 \cdot x + c_2 \cdot x^2 + ... + c_{n-1} \cdot x^{n-1} + x^n$$

where $c_1, c_2, ... c_{n-1} \in \{0;1\}$, where

- means are provided for determination of the polynomial

$$f^*(x) = 1 + c_{n-1} \cdot x + c_{n-2} \cdot x^2 + ... + x^n$$

by reflecting the coefficients of the polynomial

$$f(x) = 1 + c_1 \cdot x + c_2 \cdot x^2 + ... + c_{n-1} \cdot x^{n-1} + x^n;$$

- means are provided for remaining class determination and, for j=1,...,n, in each case determine that representative of the remaining class

$$[x^{N+j-1}] \bmod f^*$$

whose degree is less than n;

- means are provided for multiplication of the bit sequence of the initial state by a matrix whose j-th row or j-th column for j=1,...,n is given by the coefficients of the representative of the remaining class

$$[x^{N+j-1}] \bmod f^*$$

whose degree is less than n.

**15.** Apparatus according to Claim 14,
**characterized in that**
the means for remaining class determination in each case explicitly calculate the representatives of the remaining classes

$$[x^N] \bmod f^*, \ [x^{N+1}] \bmod f^*, \ ... \ [x^{N+n-1}] \bmod f^*$$

by means of a suitable algorithm, in particular by means of a square and multiply algorithm.

**16.** Apparatus according to Claim 14,
**characterized in that**
the means for remaining class determination explicitly calculate only the representative of the remaining class

$$[x^N] \bmod f^*$$

by means of a suitable algorithm, in particular by means of a square and multiply algorithm, and **in that** the means for remaining class determination obtain the representatives of the remaining classes

$$[x^{N+j-1}] \bmod f^*$$

where j=2,...,n by (n-1) calculated iterations from the coefficients of the representative of the remaining class

$$[x^N] \bmod f^*.$$

**17.** Apparatus according to Claim 16,
**characterized in that**
the means for remaining class determination obtain the representatives of the remaining classes

$$[x^{N+j-1}] \bmod f^*$$

where j=2,...,n by (n-1) calculated iterations of a shift register arrangement of the MSRG type from the coefficients of the representative of the remaining class

$$[x^N] \bmod f^*$$

where the iteration rule for the shift register arrangement is given by the characteristic polynomial

$$f^*(x) = 1 + c_{n-1} \cdot x + c_{n-2} \cdot x^2 + ... + x^n.$$

**18.** Apparatus according to one of Claims 14 to 17,
**characterized in that**
the apparatus for determination of an end state, which has n bits and is iterated N times, writes the end state as the initialization state in a shift register arrangement comprising n shift register cells $(R_1, R_2, ..., R_n)$.

**19.** Apparatus according to Claim 18,
**characterized in that**
the shift register arrangement is a shift register arrangement of the SSRG type which comprises n shift register cells $(R_1, R_2, ..., R_n)$ and whose structure is given by the characteristic polynomial

$$f(x) = 1 + c_1 \cdot x + c_2 \cdot x^2 + ... + c_{n-1} \cdot x^{n-1} + x^n$$

**20.** Use of an apparatus according to one of Claims 14 to 19 for production of a spreading sequence with an offset with N bits in a CDMA transmission system, in particular in a CDMA transmission system corresponding to one of the transmission standards UMTS or IS-95.

**21.** Use according to Claim 20,
**characterized in that**
the spreading sequence is used for transmitter-end spread coding of the signals to be transmitted.

**22.** Use according to Claim 20,
**characterized in that**
the spreading sequence is used for receiver-end decoding of the received signals.

**23.** Use according to one of Claims 20 to 22,
**characterized in that**
the spread coding is started in the CDMA transmission system at a different time than the signal transmission, with the end state, which has n bits and is iterated N times, being used as the initialization state for the production of the time-shifted spreading sequence.

**24.** Use according to one of Claims 20 to 22,
**characterized in that**
a given code number defines the offset of a spreading sequence, with the end state, which has n bits and is iterated N times, being used as the initialization state for the production of the spreading sequence which is associated with the code number N.

**Revendications**

**1.** Procédé de détermination d'un état final comprenant n bits et obtenu par n itérations d'un dispositif de registre à décalage à partir d'un état initial donné, comprenant n bits du dispositif de registre à décalage, le protocole d'itération pour le dispositif de registre à décalage étant donné par le polynôme caractéristique

$$f(x) = 1 + c_1 \cdot x + c_2 \cdot x^2 + ... + c_{n-1} \cdot x^{n-1} + x^n$$

avec $c_1, c_2, ... c_{n-1} \in \{0; 1\}$,
**caractérisé par** les stades suivants :

a) détermination du polynôme par

$$f^*(x) = 1 + c_{n-1} \cdot x + c_{n-2} \cdot x^2 + ... + x^n$$

par symétrisation des coefficients du polynôme

$$f(x) = 1 + c_1 \cdot x + c_2 \cdot x^2 + ... + c_{n-1} \cdot x^{n-1} + x^n \ ;$$

b) pour chaque j = 1, ... n, détermination du représentant de la classe résiduelle

$$[x^{N+j-1}] \bmod f^*,$$

dont le degré est inférieur à n ;

c) multiplication de la séquence de bit de l'état initial par une matrice dont la j-ième ligne ou la j-ième colonne pour j = 1, ... n est donnée par les coefficients du représentant, déterminé au stade b), de la classe résiduelle

$$[x^{N+j-1}] \bmod f^*.$$

2. Procédé suivant la revendication 1,
   **caractérisé en ce que** les représentants des classes résiduelles

$$[x^N] \bmod f^*, [x^{N+1}] \bmod f^*, ... [x^{N+n-1}] \bmod f^*$$

sont calculés respectivement explicitement au moyen d'un algorithme approprié, notamment au moyen d'un algorithme Square-and-Multiply.

3. Procédé suivant la revendication 1,
   **caractérisé en ce que** seul le représentant de la classe résiduelle

$$[x^N] \bmod f^*$$

est calculé explicitement au moyen d'un algorithme approprié, notamment au moyen d'un algorithme Square-and-Multiply, et **en ce que** les représentants des classes résiduelles

$$[x^{N+j-1}] \bmod f^*$$

avec j = 2, ... n sont obtenus par (n-1) itérations effectuées par le calcul à partir des coefficients du représentant de la classe résiduelle

$$[x^N] \bmod f^*.$$

4. Procédé suivant la revendication 3,
   **caractérisé en ce que** les représentants des classes résiduelles

$$[x^{N+j-1}] \bmod f^*$$

avec j = 2, ... n sont obtenus par (n-1) itérations effectuées par le calcul d'un dispositif de registre à décalage de type MSRG à partir des coefficients du représentant de la classe résiduelle

$$[x^N] \bmod f^*$$

le protocole d'itération pour le dispositif de registre à décalage étant donné par le polynôme caractéristique

$$f^*(x) = 1 + c_{n-1} \cdot x + c_{n-2} \cdot x^2 + ... + x^n.$$

**5.** Procédé suivant l'une des revendications précédentes,
**caractérisé en ce que** l'on utilise l'état final comprenant n bits obtenu par n itérations comme état d'initialisation pour la production d'une séquence de pseudo bruit décalée de n bits.

**6.** Procédé suivant l'une des revendications précédentes,
**caractérisé en ce que** l'on inscrit l'état final comprenant n bits et obtenu par n itérations comme état d'initialisation dans un dispositif de registre à décalage comprenant n cellules ($R_1$, $R_2$, ..., $R_n$) de registre à décalage.

**7.** Procédé suivant la revendication 6,
**caractérisé en ce que** le dispositif de registre à décalage est un dispositif de registre à décalage de type SSRG comprenant n cellules ($R_1$, $R_2$, ..., $R_n$) de registre à décalage, dont la structure est donnée par le polynôme caractéristique

$$f(x) = 1 + c_1 \cdot x + c_2 \cdot x^2 + ... + c_{n-1} \cdot x^{n-1} + x^n.$$

**8.** Procédé suivant l'une des revendications précédentes,
**caractérisé en ce que** l'on utilise le procédé dans des systèmes de transmission CDMA, notamment dans des systèmes de transmission CDMA ayant les standards de transmission UMTS ou IS-95 pour la production d'une séquence d'étalement ayant un décalage de n bits.

**9.** Procédé suivant la revendication 8,
**caractérisé en ce que** l'on utilise le procédé pour la production des codes Scrambling définis dans le standard UMTS.

**10.** Procédé suivant la revendication 8 ou la revendication 9,
**caractérisé en ce que** l'on utilise la séquence d'étalement pour le codage avec étalement côté émetteur des signaux émis.

**11.** Procédé suivant la revendication 8 ou la revendication 9,
**caractérisé en ce que** l'on utilise la séquence d'étalement pour le décodage côté récepteur des signaux reçus.

**12.** Procédé suivant l'une des revendications 8 à 11,
**caractérisé en ce que** l'on fait débuter dans le système de transmission CDMA le codage d'étalement à un autre instant que la transmission du signal, l'état final comprenant n bits et obtenu par n itérations étant utilisé comme état d'initialisation pour la production de la séquence d'étalement décalée dans le temps.

**13.** Procédé suivant l'une des revendications 8 à 11,
**caractérisé en ce que** l'on fixe par un numéro de code donné le décalage d'une séquence d'étalement, l'état final comprenant n bits et obtenu par n itérations étant utilisé comme état d'initialisation pour la production de la séquence d'étalement associée au numéro de code N.

**14.** Dispositif de détermination d'un état final comprenant n bits et obtenu par n itérations d'un dispositif à registre à décalage à partir d'un état initial donné comprenant n bits du dispositif de registre à décalage, le protocole d'itération pour le dispositif de registre à décalage étant donné par le polynôme caractéristique

$$f(x) = 1 + c_1 \cdot x + c_2 \cdot x^2 + ... + c_{n-1} \cdot x^{n-1} + x^n$$

avec $c_1$, $c_2$, ... $c_{n-1} \in \{0; 1\}$, comprenant

- des moyens de détermination du polynôme

$$f^*(x) = 1 + c_{n-1} \cdot X + c_{n-2} \cdot x^2 + ... + x^n$$

par symétrisation des coefficients du polynôme

$$f(x) = 1 + c_1 \cdot x + c_2 \cdot x^2 + ... + c_{n-1} \cdot x^{n-1} + x^n;$$

- des moyens de détermination de classes résiduelles qui déterminent pour $j = 1, ... n$, le représentant respectif de la classe résiduelle

$$[x^{N+j-1}] \bmod f^*,$$

dont le degré est inférieur à n,
- des moyens de multiplication de la séquence de bit de l'état initial par une matrice dont la j-ième ligne ou la j-ième colonne pour $j = 1, ... n$ est formée par les coefficients du représentant de la classe résiduelle

$$[x^{N+j-1}] \bmod f^*,$$

dont le degré est inférieur à n.

**15.** Dispositif suivant la revendication 14, **caractérisé en ce que** les moyens de détermination de classe résiduelle

$$[x^N] \bmod f^*, [x^{N+1}] \bmod f^*, ... [x^{N+n-1}] \bmod f^*$$

calculent les représentants des classes résiduelles respectivement explicitement au moyen d'un algorithme approprié, notamment au moyen d'un algorithme Square-and-Multiply.

**16.** Dispositif suivant la revendication 14, **caractérisé en ce que** les moyens de détermination de classe résiduelle calculent seulement le représentant de la classe résiduelle

$$[x^N] \bmod f^*$$

explicitement au moyen d'un algorithme approprié, notamment au moyen d'un algorithme Square-and-Multiply et **en ce que** les moyens de détermination de classes résiduelles obtiennent les représentant des classes résiduelles

$$[x^{N+j-1}] \bmod f^*$$

avec $j = 2, ..., n$ (n-1), itération effectuée par le calcul à partir des coefficients du représentant de la classe résiduelle

$$[x^N] \bmod f^*.$$

**17.** Dispositif suivant la revendication 16, **caractérisé en ce que** les moyens de détermination de classes résiduelles obtiennent les représentants des classes résiduelles

$$[x^{N+j-1}] \bmod f^*$$

avec $j = 2, ..., n$ par (n-1) itération effectuée par le calcul d'un dispositif de registre à décalage du type MSRG à partir des coefficients du représentant de la classe résiduelle

$$[x^N] \bmod f^*,$$

le protocole d'itération pour le dispositif de registre à décalage étant donné par le polynôme caractéristique

$$f^*(x) = 1 + c_{n-1} \cdot x + c_{n-2} \cdot x^2 + ... + x^n.$$

18. Dispositif suivant l'une des revendications 14 à 17,
    **caractérisé en ce que** le dispositif de détermination d'un état final contenant n bits et obtenu par n itérations est décrit en tant qu'état d'initialisation dans un dispositif de registre à décalage comprenant n cellules ($R_1$, $R_2$, ..., $R_n$) de registre à décalage.

19. Dispositif suivant la revendication 18,
    **caractérisé en ce que** le dispositif de registre à décalage est un dispositif de registre à décalage de type SSRG comprenant n cellules ($R_1$, $R_2$, ..., $R_n$) de registre à décalage, dont la structure est donnée par le polynôme caractéristique

$$f(x) = 1 + c_1 \cdot x + c_2 \cdot x^2 + ... + c_{n-1} \cdot x^{n-1} + x^n.$$

20. Utilisation d'un dispositif suivant l'une des revendications 14 à 19 pour la production d'une séquence d'étalement ayant un décalage de n bits dans un système de transmission CDMA, notamment dans un système de transmission CDMA correspondant à l'un des standards de transmission UMTS ou IS-95.

21. Utilisation suivant la revendication 20,
    **caractérisée en ce que** l'on utilise la séquence d'étalement pour le codage avec étalement côté émetteur des signaux émis.

22. Utilisation suivant la revendication 20,
    **caractérisée en ce que** l'on utilise la séquence d'étalement pour le décodage côté récepteur des signaux reçus.

23. Utilisation suivant l'une des revendications 20 à 22,
    **caractérisée en ce que** l'on fait débuter dans le système de transmission CDMA le codage d'étalement à un autre instant que la transmission du signal, l'état final comprenant n bits et obtenu par n itérations étant utilisé comme état d'initialisation pour la production de la séquence d'étalement décalée dans le temps.

24. Utilisation suivant l'une des revendications 20 à 22,
    **caractérisée en ce que** l'on fixe par un numéro de code donné le décalage d'une séquence d'étalement, l'état final comprenant n bits et obtenu par n itérations étant utilisé comme état d'initialisation pour la production de la séquence d'étalement associée au numéro de code N.

Fig. 1

$$T^N = \begin{pmatrix} (t_{1,k})_{k=1,2,..,n} \\ (t_{2,k})_{k=1,2,..,n} \\ \vdots \\ (t_{n,k})_{k=1,2,..,n} \end{pmatrix} = \begin{pmatrix} [x^N] \bmod f^* \\ [x^{N+1}] \bmod f^* \\ \vdots \\ [x^{N+n-1}] \bmod f^* \end{pmatrix}$$

Fig. 2

| Gewünschter Offset | Bisheriges Verfahren | Oben beschriebenes Verfahren |
|---|---|---|
| 100 | 100 | 660 |
| 1.000 | 1.000 | 1.000 |
| 10.000 | 10.000 | 1.400 |
| 50.000 | 50.000 | 1.600 |
| 100.000 | 100.000 | 1.750 |
| 200.000 | 200.000 | 1.860 |

Fig. 3

EP 1 430 614 B1